(19) **Europäisches Patentamt European Patent Office Office européen des brevets**

(11) **EP 2 076 983 B1**

(12) **EUROPEAN PATENT SPECIFICATION**

(45) Date of publication and mention
of the grant of the patent:
**30.05.2012 Bulletin 2012/22**

(21) Application number: **06813047.5**

(22) Date of filing: **27.10.2006**

(51) Int Cl.:
***H04J 3/06*** (2006.01)

(86) International application number:
**PCT/SE2006/050427**

(87) International publication number:
**WO 2008/051123 (02.05.2008 Gazette 2008/18)**

(54) **METHOD FOR CLOCK RECOVERY USING UPDATED TIMESTAMPS**

VERFAHREN ZUR TAKTWIEDERGEWINNUNG UNTER VERWENDUNG AKTUALISIERTER ZEITSTEMPEL

PROCÉDÉ DE RÉCUPÉRATION D'HORLOGE UTILISANT DES ESTAMPILLES TEMPORELLES MISES À JOUR

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**08.07.2009 Bulletin 2009/28**

(73) Proprietor: **Telefonaktiebolaget L M Ericsson (PUBL)**
**164 83 Stockholm (SE)**

(72) Inventor: **RUFFINI, Stefan**
**00179 Rome (IT)**

(74) Representative: **Lundqvist, Alida Maria Therése**
**BRANN AB**
**P.O. Box 12246**
**102 26 Stockholm (SE)**

(56) References cited:
| | |
|---|---|
| **US-A- 5 793 976** | **US-A1- 2003 002 483** |
| **US-A1- 2004 066 775** | **US-A1- 2004 148 437** |
| **US-A1- 2004 223 518** | **US-A1- 2006 146 865** |

• **MOON S.B. ET AL.: 'Estimation and removal of clock skew from network delay measurements' INFOCOM '99. EIGHTEENTH ANNUAL JOINT CONFERENCE OF THE IEEE COMPUTER AND COMMUNICATIONS SOCIETIES. PROCEEDINGS. IEEE vol. 1, 21 March 1999 - 25 March 1999, pages 227 - 234, XP010323728**

## Description

TECHNICAL FIELD

The present invention relates to methods and arrangements for clock recovery in telecommunications systems, and more particularly, to clock recovery for a Constant Bit Rate (CBR) service transported over a packet network.

BACKGROUND

Packet networks were originally built to transport asynchronous data. However, today it is common to create hybrid packet/circuit environments which combine packet technologies, such as ATM (Asynchronous Transfer Mode), IP (Internet Protocol) and Ethernet, with traditional TDM (Time Division Multiplex) systems. TDM services have strict synchronization requirements. A packet network transporting a TDM signal shall provide correct timing at its traffic interfaces. One important aspect when TDM signals are carried over packet networks is therefore clock recovery.

Synchronization in TDM networks is well understood and implemented. Typically, a TDM circuit service provider will maintain a timing distribution network, providing synchronization traceable to a Primary Reference Clock (PRC, i.e., a clock compliant with ITU-T Recommendation G.811). Synchronization is required in order to meet network performance and availability requirements.

The timing requirements that apply when TDM signals are transported through packet networks relate to jitter and wander limits at traffic and/or synchronization interfaces, long term frequency accuracy and total delay. Large amounts of jitter and wander will arise if the network synchronisation is poor which will result in service problems causing high error rates and possibly service unavailability. Network synchronization needs must thus be carefully considered when networks are deployed.

There are several known methods for recovering the service clock of a Constant Bit Rate (CBR) service (e.g. a Circuit Emulated TDM signal) transported over a packet network. These methods can be divided into three main types of methods;

- Network synchronous methods: when transmitter and receiver have access to the network clock (usually a PRC traceable reference), and the service clock is synchronous with the network clock.

- Differential methods: when transmitter and receiver have access to the network clock (usually a PRC traceable reference), but the service clock is carried asynchronously over the packet network.

- Adaptive methods: when transmitter and receiver have no access to the network clock and the service clock is carried asynchronously over the packet network.

These different types of methods have different characteristics. Network synchronous and differential methods can guarantee the best performance. However both require the distribution of an accurate reference timing signal, traceable to a PRC to all the end equipment.

The problem on how to distribute the reference timing signal in the packet network is thus closely related to the issue of TDM clock recovery. The main approaches are either to use a PRC distributed architecture (e.g. using GPS, Global Positioning System, based clocks), or to distribute the timing from an accurate master (Primary Reference Clock) to the end nodes. This can be achieved either using the physical layer, when this is synchronous (e.g. SDH, or synchronous Ethernet Physical layer which is going to be standardized by ITU-T in the document "G. 8261 Timing and Synchronization aspects in packet networks", published in May 2006), or via new methods based on an adaptive approach (e.g. using NTP (Network Time Protocol) described in "RFC 1350 NTP Network Time Protocol" published by the Internet Engineering Task Force (IETF) in march 1992 or the protocol described in "IEEE-1588™ Standard for a Precision Clock Synchronization Protocol for Networked Measurement and Control Systems", published by IEEE in 2002).

With the Network synchronous methods, the timing transparency of the TDM service clock is not preserved, i.e. the outgoing service clock frequency does not replicate the incoming service clock frequency. The differential methods are implemented when timing transparency of TDM service clock is required instead.

The third class of methods, adaptive methods, are those implemented when an accurate reference timing signal is not available in the end node, and timing transparency shall be maintained. This is a very common scenario and it is thus important to address the related timing issues.

In the adaptive methods the service clock from a packet stream containing constant bit rate data can be recovered by means of some computing function that depend on the arrival time of the packets at the destination node. There are several different known computing functions to choose from. One problem with the adaptive methods is that they are very sensitive to packet delay variation. If the delay of the packets varies, it may be perceived by an adaptive clock recovery mechanism as a change in phase or frequency of the original service clock Therefore the presence of packet delay variation may impair the quality of the recovered service clock.

US 2003/0002483 discloses a method to achieve synchronization in an asynchronous data packet network. Time information is transmitted from the sending node to the receiving node and updated in each intermediate node on the route between sending and receiving nodes.

SUMMARY

As mentioned above the adaptive methods for clock recovery of the service clock of a constant bit rate service are very sensitive to packet delay variation. An object of the present invention is to provide alternative methods and mechanisms for adaptive clock recovery that allow for a reduction of the negative impact from packet delay variation.

The above stated object is achieved by means of the methods and mechanism defined in the independent claims.

An advantage of the present invention is that it allows for a reduction of the negative impact from packet delay variation on service clock recovery of a service clock relating to constant bit rate service that is transmitted over a packet network. Thereby the quality of the recovered service clock may be improved. The methods and mechanisms according to the present invention are especially advantageous to use when there is no accurate timing reference available in the receiving end node and the packet delay variation in the packet network is high. The reason for this is that the methods and mechanisms according to the present invention are less sensitive to packet delay variation than methods and mechanisms for adaptive clock recovery according to the prior art.

Another advantage of the present invention is that it can be easily implemented in existing telecommunications networks without requiring significant upgrades in existing telecommunications nodes.

A further advantage of the present invention is that it can easily be implemented by means of simple adaptations of existing communications protocols such as RTP (Real-Time Transport Protocol) and NTP (Network Time Protocol).

Further advantages and features of embodiments of the present invention will become apparent when reading the following detailed description in conjunction with the drawings.

BRIEF DESCRIPTION OF THE DRAWINGS

Fig. 1a is a schematic diagram illustrating expected arrival times and actual arrival times of a stream of data packets.

Fig. 1b is a schematic diagram illustrating an example of packet delay variation of a group of data packets over time.

Fig. 2 is a schematic block diagram of illustrating the principle of an adaptive method for clock recovery of a service clock relating to a constant bit rate service transmitted over a packet network.

Fig. 3 is a schematic block diagram illustrating a network architecture in which an embodiment of the present invention is implemented.

Fig. 4 is a schematic block diagram illustrating the network architecture of Fig. 3 and the delay and packet delay variation of different segments of the network.

Fig. 5 is a schematic graph illustrating a reduction of packet delay variation in data used for clock recovery, which can be achieved by means of the present invention.

Fig. 6 is a schematic block diagram of an extended RTP packet header which may be used to implement an embodiment of the present invention.

Fig. 7 is a schematic block diagram of a network architecture in which a combined differential-adaptive method for clock recovery according to the present invention is used.

Fig. 8 is a schematic block diagram of a service clock estimating mechanism in a receiving end node which can be used to implement the combined differential-adaptive method for clock recovery illustrated in Fig. 7.

Fig. 9 is a schematic block diagram illustrating a mechanism for adaptive clock recovery support in an intermediate node according to the present invention.

DETAILED DESCRIPTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like reference signs refer to like elements.

"Adaptive methods" is a generic term that refers to a class of methods which regenerate a clock from packet timing. These methods are point-to-point methods that will work transparently through different sorts of network equipment like switches and routers.

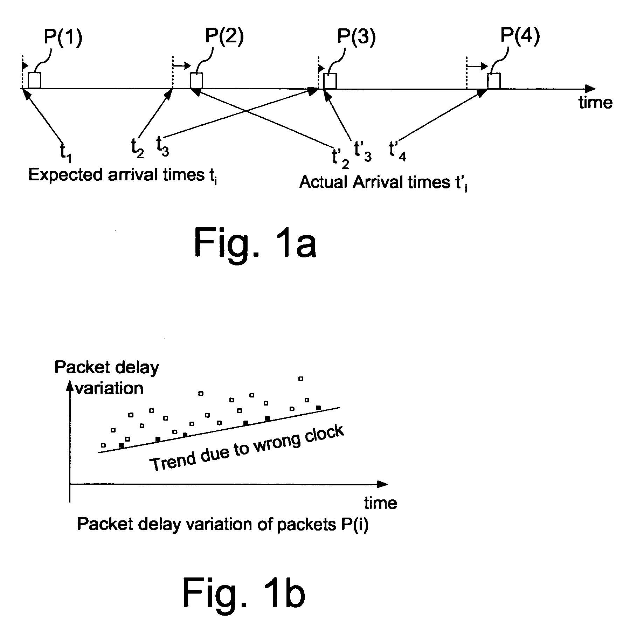

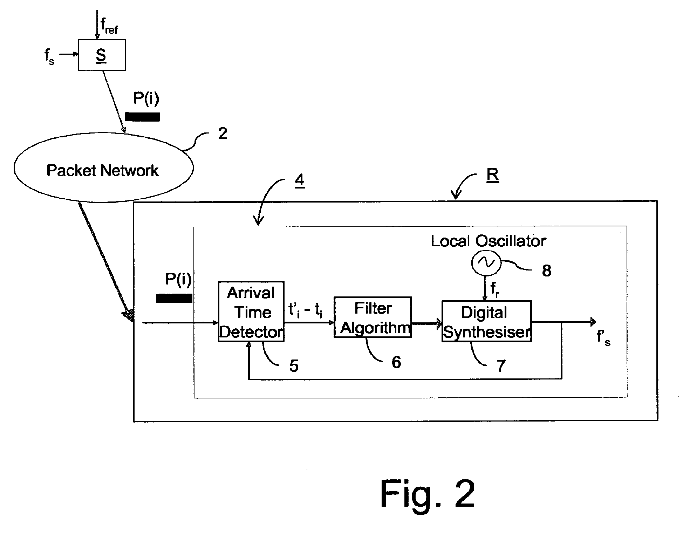

Adaptive methods use some computing function of the arrival rate or arrival times of packets at a destination node to recover the service clock. Fig. 1a illustrates an example of packet arrival times and Fig. 1b is an example of a graph of packet delay variation over time. Fig. 2 is a schematic block diagram illustrating the principle of adaptive clock recovery by means of an example. According to this example, a sending end node S (here a sending IWF, InterWorking Function) will send packets P(i) at a constant rate over a packet network 2 to a receiving end node (IWF) R. The packet rate is derived from a service clock $f_s$ at the sending IWF. At the sending IWF a network clock $f_{ref}$ that is traceable to a PRC clock is also available. The network clock $f_{ref}$ can in general be different from the service clock $f_s$. The end

equipment at the receiving IWF shall recover the service clock, $f_s$. The expected arrival time of the packet P(i) at the receiving IWF is denoted by $t_i$ and the actual arrival time as calculated by a local clock $f_r$ at the receiving IWF is denoted by $t'_i$. The clock recovery at the receiving IWF can then be based on a comparison of the actual arrival time $t'_i$ of the packets P(i) with the expected arrival time $t_i$. This information can be used to control a local Phase-Locked Loop (PLL) 4 as illustrated in Fig. 2. The PLL 4 includes an arrival time detector 5 that outputs the difference between the actual arrival time $t'_i$ and the expected arrival time $t_i$ to a filter algorithm 6, which outputs a signal to a digital synthesiser 7 controlled by a local oscillator or clock $f_r$. The digital synthesiser outputs an estimate of the service clock $f'_s$. The expected arrival times $t_i$ are derived from the estimated service clock $f'_s$.

When the service clock $f_s$ and the network clock $f_{ref}$ are synchronous, the expected arrival time could be directly derived from timestamps generated by the network clock $f_{ref}$ in the originating equipment and included in the packets P(i). If on the other hand the service clock is not synchronous with the network clock that generates the timestamp, the frequency difference between the service clock and the network clock shall be taken into account when recovering the service clock in the receiving IWF. It can be noticed that in case the time stamp is based on a reading of the network clock $f_{ref}$ the frequency difference would implicitly be carried by a packet by the combination of the sequence number and the actual network clock time, as the nominal packet rate is known.

Due to the characteristics of the adaptive methods, the quality of the regenerated clock is very much dependent on the delay variation of the packets P(i) introduced by the packet network 2. The adaptive methods will try to compute an estimated service clock $f'_s$ that as closely as possible corresponds to the service clock fs by minimizing the difference between the actual arrival times $t'_i$ and the expected arrival times $t_i$. However packet delay variation may falsely be interpreted by the adaptive clock recovery mechanism as a change in phase or frequency of the service clock $f_s$.

In order to reduce the impact from packet delay variation the adaptive clock recovery calculations may be based only on the packets with minimum delay as illustrated in Fig. lb. Minimum delay packets are illustrated as black squares. Figure 1b also illustrates an increasing packet delay variation of the packets over time which is an indication that there is an error in the estimated service clock $f'_s$.

A packet network can be described as a chain of network elements, such as Ethernet switches, IP routers, etc., each adding packet delay variation due to processing and queuing.

As described above, one of the main disadvantages of the adaptive methods for clock recovery is that they are sensitive to packet delay variation. The present invention is therefore aiming at reducing the possible impact of packet delay variation in the clock recovery of e.g.

TDM traffic.

The basic idea that the present invention is based on is to partition the packet network in segments where it is possible to predict the contribution to the total packet delay variation. By updating timestamp information associated with the packets during the packets journey through the packet network, it is possible to reduce the impact of packet delay variation from critical sections in the packet network that largely contributes to the total packet delay variation. Such critical sections may for instance comprise older generation equipment or may be bottleneck sections with lower available capacity which may lead to queuing of packets.

This can be achieved by adding a timestamping mechanism for updating packet timestamps in one or several intermediate nodes that the packets will pass on their way from the sending IWF to the receiving IWF. In order to be able to update the timestamps the intermediate node should have access to an accurate reference timing signal e.g. GPS. The receiving IWF should also be adapted to use the updated timestamps in the service clock recovery procedure.

Below embodiments of the present invention that use the RTP protocol (Real-Time Transport Protocol) will be described. However the present invention may also be used together with other protocols, such as e.g. AAL1 in ATM networks.

Embodiments using the NTP protocol (Network Time Protocol) for distributing an accurate timing reference will also be described. However other equivalent protocols could also be used such as the protocol described in standard document IEEE-1588 mentioned above.

The RTP protocol is well known to the person skilled in the art and described in RFC 3550 published by the IETF in 2003. The RTP protocol is a transport protocol for real-time applications and provides information regarding sequence number and timestamp in header information. The timestamp is used to relate a packet to a real point in time, which can be used for estimation of the packet jitter and for synchronizing different flows belonging to the same media. RTCP (RTP control protocol) packets are used to relate the sampling time with a reference clock. The timestamp in an RTP header is incremented by the packetization interval times the sampling rate. For example, for speech packets containing 20ms of speech sampled at 8,000 Hz, the timestamp for each block of speech samples increases by 160, even if the block is not sent due to silence suppression.

In case the service that is the subject of adaptive timing recovery is carried over RTP the service clock can be recovered using the timestamps included in the RTP packets, in fact this timestamp information should provide the nominal sampling time.

Timestamps may be used for different purposes. However in this application the focus is on timestamps that are used for frequency synchronization (i.e. clock recovery) and the generic term "sync-timestamp" will be used for timestamps with this particular purpose. In the case of the RTP protocol the sync-timestamp may or may not coincide with the RTP timestamp included in the RTP header depending on the implementation of the present invention.

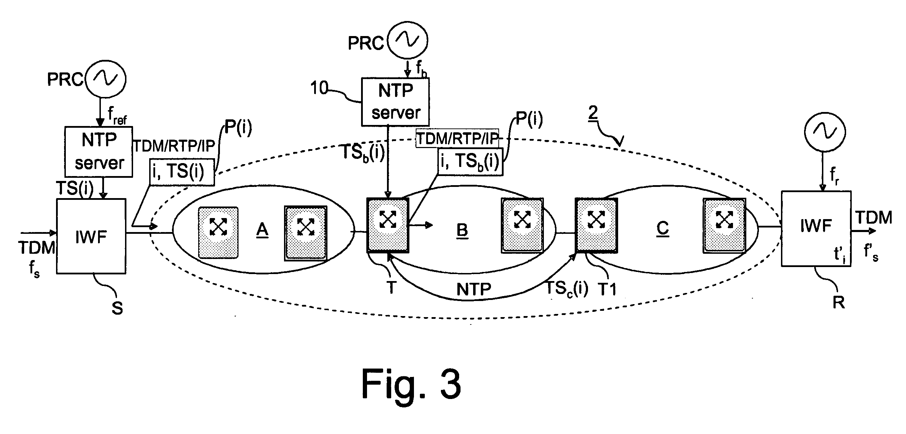

An embodiment of the present invention will now be described with reference to a network architecture illustrated in Fig. 3. A TDM service is carried over a packet network 2 and after transportation over the packet network 2, the service clock $f_s$ should be recovered. An IWF S is the sender end-equipment terminating the TDM flow and generating the related packets. An IWF R is the receiving end-equipment that shall recover the service clock $f_s$ by deriving an estimated service clock $f'_s$ using its own local clock with frequency $f_r$.

At the sender side, i.e. sending IWF S, the network clock $f_{ref}$ is available. The network clock $f_{ref}$ is a reference timing signal with known accuracy (here PRC quality). In the case the TDM service is synchronous with the network clock $f_{ref}$ (i.e. traceable to a PRC source as in case of a 2048 kbit/s service generated by a PSTN network), the TDM signal itself can be the reference timing signal that is used in the sending IWF S. Otherwise the network clock $f_{ref}$ could be generated by another reference timing signal, e.g. from a local GPS receiver.

In order to use the present invention, an accurate reference timing signal $f_b$ shall also be available in some intermediate node T. This reference timing signal $f_b$ could be generated by a local source (e.g. a GPS receiver), or a recovered low-noise PRC traceable reference timing signal.

In fig. 3 TS(i) denotes a series of sync-timestamps as generated by the network clock $f_{ref}$ in the sending IWF S. These sync-timestamps may e.g. have the NTP format. The packet network 2 comprises different network segments A, B, C as illustrated in Fig. 3. According to this embodiment of the present invention the sync-timestamp TS(i) is updated in the intermediate node T in the network segment B where there is access to an accurate time server 10, in this case an NTP Time Server, either co-located (e.g. a GPS receiver), or connected via a packet network with low packet delay variation. The new updated sync-timestamp is denoted by $TS_b(i)$. By updating the sync-timestamp information in the packets P(i), it is possible to significantly reduce the impact of the packet delay variation on the clock recovery.

In fig. 3 it is illustrated that the sync-timestamp field of the packet P(i) is updated in the intermediate node T. The packet P(i) will originally be provided with the timestamp TS(i) generated by the network clock $f_{ref}$ in the sending IWF S. However when the packet P(i) reaches the intermediate node T the timestamp TS(i) will be updated and the packet P(i) will receive a new timestamp $TS_b(i)$ generated by the reference timing signal $f_b$, which is PRC traceable.

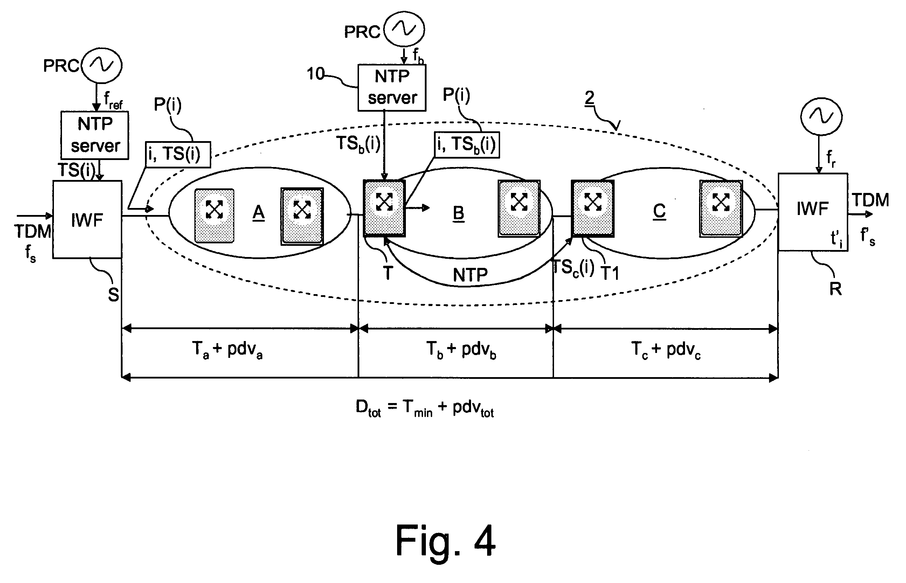

According to the present invention the clock recovery mechanism should derive the estimated service clock $f'_s$ by means of a calculation function that uses the updated timestamp $TS_b(i)$ instead of the initial timestamp TS(i). Thereby the impact from packet delay variation on the clock recovery will be reduced. This result is illustrated and explained by means of an example in Fig. 4.

The total delay of a packet between the sending IWF S and the receiving IWF R is $D_{tot}$, which is given by a minimum delay $T_{min}$ plus some variable packet delay variation $pdv_{tot}$, i.e.

$$D_{tot} = T_{min} + pdv_{tot.}$$

Since the packet network 2 has been divided into segments A, B, and C, the minimum delay through the packets and the total packet delay variation can be divided into components representing the delay contribution from each segment respectively, i.e.

$$T_{min} = T_a + T_b + T_c$$

$$pdv_{tot} = pdv_a + pdv_b + pdv_c$$

The arrival time $t'_i$ of packet P(i) in the receiving IWF R as calculated by a local clock is (in case the local clock at the receiving IWF R and the time stamping mechanism that generates the timestamp TS(i) have different starting times a constant offset should be added to TS(i) in order to get the actual time when packet P(i) is delivered from S, however as it does not impact the final result, it is not shown in the following formulas and in the following examples)

$$t'_i = TS(i) + D_{tot} + \delta_i,$$

where $\delta_i$ is an error due to $f'_s$ not being equal to $f_s$ and the estimated service clock is a function "F" of a time difference between the arrival time and a timestamp:

$$f'_s = F(t'_i - TS(i)) = f_s + \varepsilon,$$

where $\varepsilon$ is an error.

By updating the timestamp TS(i), the arrival time and the estimated service clock can instead be computed using the updated timestamp $TS_b(i)$

$$t'_i = TS_b(i) + D_{tot} - (T_a + pdv_a) + \delta_i$$

$$\mathbf{f'_s = F(t'_i - TS_b(i)) = f_s + \varepsilon_b}$$

where $\varepsilon_b$ is an error representing a difference between the estimated service clock $f'_s$ and the service clock $f_s$ when recovering the service clock based on the updated timestamps $TS_b(i)$.

Thereby the packet delay variation $pdv_a$ introduced by network segment A would be eliminated from the clock recovery computations. The only impact from packet delay variation on the recovery of the service clock would come from the packet delay variation generated network segments B and C, i.e. $pdv_b$ and $pdv_c$ respectively. Thus the packet delay variation that affects the clock recovery mechanism is reduced when the present invention is used.

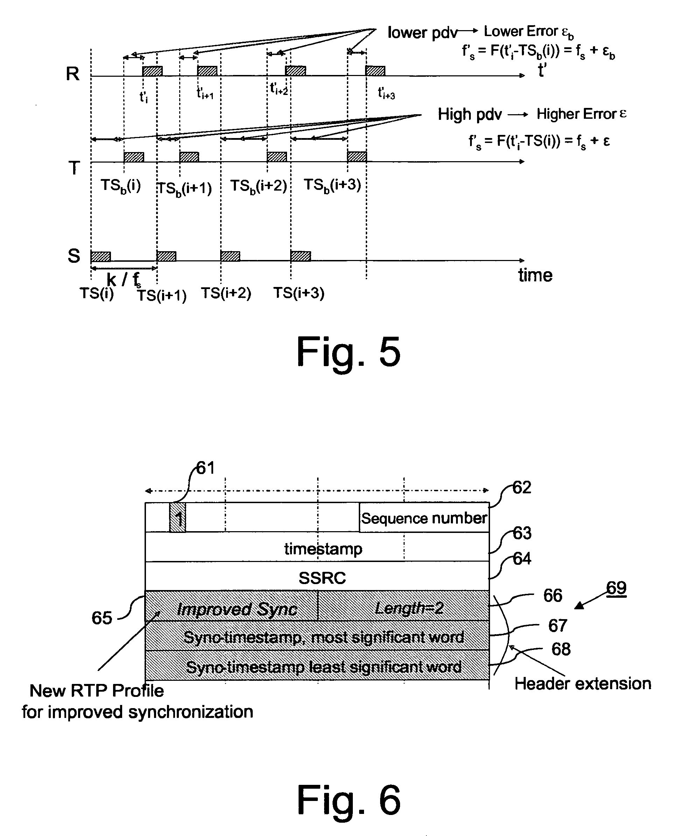

Fig. 5 provides a graphical view on the reduction of the packet delay variation that affects the clock recovery mechanism by using an intermediate timestamping mechanism that updates the initial timestamps of the packets. The time difference between the arrival time and the updated timestamp $t'_i - TS_b(i)$ is significantly less impacted by the packet delay variation in the packet network 2 if compared with the total time difference between the arrival time and the initial time stamp $t'_i - TS(i)$. The resulting error $\varepsilon_b$ can then be assumed to be lower than the error $\varepsilon$ that would have been created when the total packet delay variation affected the clock recovery computations.

There are several known computation functions F for adaptive clock recovery that could be used in combination with the present invention. The function F could for instance be a simple implementation based on the Phase Locked Loop principle. In that case that output frequency (i.e. the estimated service clock) is driven by a system minimizing the phase (or time) difference as done in traditional synchronous networks. However, the noisy characteristics of packet networks often require some advanced methodology. Solutions may for instance be based on Kalman filter estimators. In addition a preselection of the input samples may be required (only the best samples are used)

In Fig. 3 and Fig. 4 it is illustrated that an intermediate node T1 also has access to an accurate time reference $f_c$ although not via a local time server but via a remote time server connected via a packet network less noisy that the packet network where traffic is carried. In this case the reference timing signal is communicated by means of NTP packets to node T1. The impact from packet delay variation introduced by network segment B would also be reduced in case node T1 can replace in its turn the sync-timestamp $TS_b(i)$ with a new updated sync-timestamp $TS_c(i)$. The "noise" related to the NTP packets carrying the time reference $f_c$ is to be accounted, but is expected to be lower that the noise ($pdv_b$) accumulated by the traffic packets.

A requirement for being able to implement the present invention is that an accurate timing reference signal is available (or can be made available) in the intermediate node (or nodes) that is (are) going to update the initial timestamps. Since intermediate nodes in existing networks often have access to such a time reference implementation of the present invention is often simple. A typical example is that telecom sites such as sites hosting BSC, RNC, MSC, MGW, Access GW, etc. often have a GPS time server implemented in the site. However GPS receivers could be expensive and/or not practical to implement in the receiving IWF R. Typically one intermediate node T would be connected to several receiving end nodes R so there would be considerably more receiving end nodes than intermediate nodes. Therefore one advantage of the present invention is that accuracy in timing recovery can be improved without providing access to an accurate timing reference in the receiving end node (i.e. receiving IWF R). It is often possible to improve the accuracy in timing recovery by making use of already existing reference timing information in intermediate nodes in the packet network in a new way.

There are several possible formats for the sync-timestamp used according to the present invention. In case of RTP packets, the sync-timestamp could in principle be the same timestamp as carried in the RTP header. This would allow a very simple implementation of the present invention. However there may be some problems with the precision and a "non-standard" use of the RTP-timestamp (as it should be a nominal sampling rate according to the RTP standard) as will be discussed further below. In addition it should be noticed that this implementation is only possible if the service clock $f_s$ is synchronous with the network clock $f_{ref}$. A more general approach could instead be based on defining a new specific RTP header extension carrying the new updated sync-timestamps. Such an exemplary embodiment will be further explained below.

Now an embodiment that makes use of the RTP timestamp such that the sync-timestamp is the RTP timestamp itself will be discussed. As mentioned above this approach allows for a simple implementation but it is only possible when the service clock is synchronous with the network clock. In fact by replacing the original RTP timestamp with the updated sync-timestamp, the actual information on the sampling time of the packet and therefore on the service clock itself would be lost. The new timestamps are now carrying the information on the network clock only (e.g. GPS assuming that the timestamps are updated based on a GPS reference timing signal).

When the service clock in not synchronous with the network clock (e.g. a 2048 kbit/s service may have up to 50 ppm frequency deviation from the nominal bit rate), the information on the frequency difference could in fact be distributed by the timestamps according to a differential method approach. The sending IWF S can generate the timestamps relative to the reference clock $f_{ref}$ and these shall not be changed in the transmission towards the receiving IWF. Therefore the updated sync-timestamps should instead e.g. be included in an RTP header extension as will be explained in greater detail below.

The timestamp defined in the RTP header is 32 bits, which gives a precision of about 15 microseconds. However, jitter and wander limits as specified in relevant standards require a precision in the order of a few microseconds. Therefore if the present invention is to be implemented using RTP, a header extension may be needed in order to get a better precision. By comparison, a timestamp of the NTP format is a 64 bits unsigned fixed point number. This length allows a sub-nanosecond precision.

Fig. 6 illustrates a possible format of an extended RTP header that has been adapted to carry the sync-timestamp that is updated in one or several intermediate nodes according to the present invention. As described in RFC 3550 it is possible to include an extension in the RTP header. In that case an extension bit 61 should be set to indicate that the fixed header fields are followed by a header extension 69. The format of the header extension is specified by means of a field 65, which indicates a new RTP profile for improved synchronization according to the present invention, and by means of field 66 which specifies the length of the header extension (here 2x32 bits words). The sync-timestamp according to the present invention may be carried in fields 67 and 68. Fig. 6 also shows a fixed RTP header field 62, which is a 16 bits field for carrying the sequence number of a RTP packet, a fixed RTP header field 63, which is a 32 bits field for carrying the RTP timestamp, and a fixed RTP header field 64, which is a 32 bits field called SSRC that identifies the synchronization source.

It can be noted that a sequence number, such as "Sequence number" (field 62 in Fig. 6) in the RTP header, is needed in order to handle packet loss and misordered packets. Therefore it is advantageous to implement a proper interpolation procedure in the clock recovery mechanism in order for the clock recovery algorithm to work also when packets are lost.

The present invention is not limited to the use of timestamps included in the actual user data packets e.g. RTP packets. It is also possible to implement the present invention using dedicated timestamps that are distributed e.g. by means of NTP to the receiving IWF separately from the stream of user data packets. A disadvantage of this approach is the need to define dedicated timing connections all the way to the end nodes.

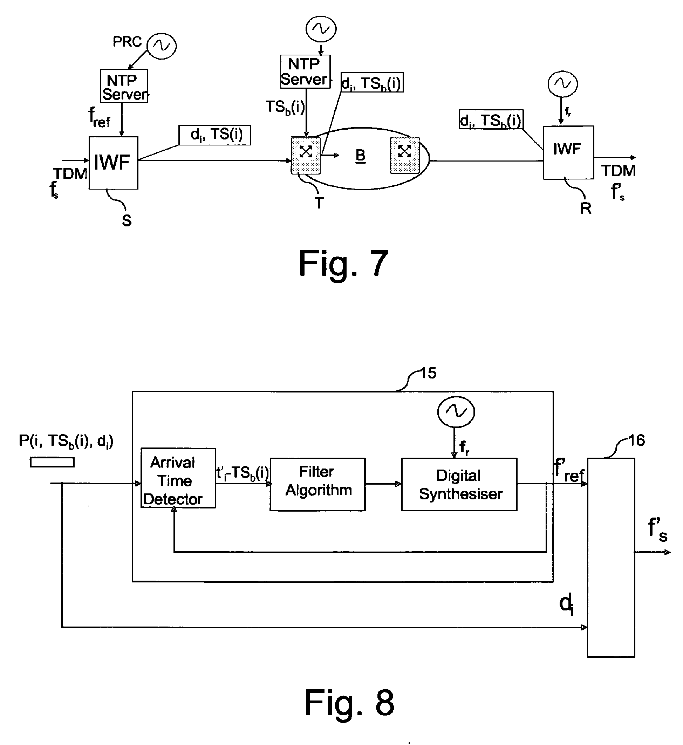

If the service clock $f_s$ is different from the network clock $f_{ref}$ it is possible to combine the adaptive method for clock recovery according to the present invention with a differential method for clock recovery as illustrated schematically in Fig. 7. In addition to the sync-timestamp $TS_b(i)$ the receiving IWF will need differential information $d_i$ that carries information on the difference between the service clock $f_s$ and the network clock $f_{ref}$. The differential information $d_i$ is generated in the sending IWF S and transmitted to the receiving IWF R. The differential information $d_i$ could for instance be the RTP timestamp as generated by the system clock which is synchronous to the network clock $f_{ref}$. In that case the RTP timestamp can not be replaced by the updated sync-timestamp $TS_b$ (i) in the intermediate node T. The sync-timestamp will instead have to be included in the packet header along with the RTP timestamp for instance as indicated in Fig. 6 or transmitted as a dedicated timestamp separate from the user data packet.

The operations in the receiving end node (IWF) R according to the combined differential-adaptive method are illustrated schematically with an example in Fig. 8. A circuit 15 (a Phase Locked Loop circuit in this example) will output an estimated network clock $f'_{ref}$ A differential computing unit 16 will then output the estimated service clock $f'_s$ based on the estimated network clock $f'_{ref}$ and the differential information $d_i$ (the estimated service clock $f'_s$ is given by the estimated network clock $f'_{ref}$ modified by a function of the differential information $d_i$).

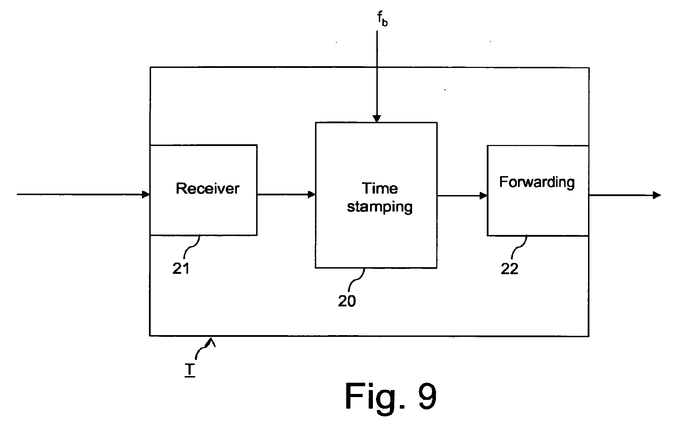

In order to implement the ideas of the present invention in an existing telecommunications system some modifications are necessary. Fig. 9 is a schematic block diagram illustrating an intermediate node T according to the present invention. One or several intermediate nodes that are going to provide the updated sync-timestamps associated with the passing packets will need access to an accurate reference timing signal $f_b$. The accurate reference timing signal could e.g. be a timing signal from a co-located timing server or a timing reference that is distributed from another node via a high-priority timing connection. However, since an accurate reference timing signal in many cases already is available in many intermediate nodes, it may not be necessary to make any modifications due to this requirement. It may however be necessary to modify some software and/or hardware in the intermediate node(s) in order to provide the intermediate node(s) with a timestamping mechanism 20 for creating the new updated timestamps associated with the passing user data packets. The intermediate node(s) must also include a receiver 21 to be able to receive the packets with associated timestamps and, depending on the implementation of the present invention, either modify the received packets if the sync-timestamp is included in the packet as discussed above or create the sync-timestamp as a dedicated timestamp that is forwarded separately to a following node or to the receiving end node. Thus the intermediate node(s) T should also include a forwarding mechanism 22. The packets received by the receiver 21 could either be received directly from the sending end node S or via one or several other nodes, such as another intermediate node T in case of an implementation in which timestamps are updated in several intermediate nodes T. Correspondingly, packets or timestamps could be forwarded to the receiving end node R either directly or via one or several other nodes.

In order to implement the present invention in the receiving end node R it may be necessary to modify some software and/or hardware in the receiving end node R. The receiving end node should include a service clock estimating mechanism for recovering the service clock $f_s$ using the sync-timestamps that are either included in the received user data packets or received separately as dedicated timestamps. Such a service clock estimating mechanism may for instance be the mechanism illustrated in Fig. 8. If the present invention is implemented such that the sync-timestamps replace the original RTP timestamp it is important that the receiving end node is adapted so that it does not use the sync-timestamp for computations that should be based on the original RTP timestamp (e.g. differential timing computations). If the sync-timestamps are included in an RTP header extension the receiving end node must be adapted to interpret the extended RTP packets and extract the sync-timestamps for use in the service clock estimating mechanism. If the sync-timestamps are transmitted to the receiving end node as dedicated timestamps the receiving end node will obviously have to be adapted to handle such dedicated timestamps properly.

The above description of the present invention is based on the assumption that the data and the timing is preserved end-to-end. In case of protocol translation in the network (e.g. from RTP to other protocols) some data adaptation is needed, i.e. the sync-timestamp would need to be translated into a new data format.

From the description above the person skilled in the art will realize what software and/or hardware modifications are necessary and/or suitable in different telecommunications nodes in order to implement different embodiments of the present invention.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. An adaptive clock recovery method for recovering a service clock ($f_s$) of a constant bit rate, CBR, service transmitted as a stream of data packets (P(i)) over a packet network (2) from a sending end node (S) to a receiving end node (R), via at least one intermediate node (T), which method includes:

associating data packets (P(i)) relating to the CBR service with timestamps (TS(i)) generated by a first reference timing signal ($f_{ref}$) in the sending end node (S); **characterized in that** the method further includes:

generating differential information ($d_i$) in said sending end node (S), which differential information ($d_i$) is indicative of a timing difference between the service clock ($f_s$) and the first reference timing signal ($f_{ref}$), transmitting said differential information ($d_i$) to said receiving end node (R);
associating data packets (P(i)) relating to the CBR service, in at least one intermediate node (T), with updated timestamps ($TS_b$(i)) generated by a second reference timing signal ($f_b$) available in the intermediate node (T); and
recovering the service clock ($f_s$) in the receiving end node (R) by means of a computing function (F) for adaptive clock recovery using said updated timestamps ($TS_b$(i)) and using said differential information ($d_i$) to compensate for the timing difference between the service clock ($f_s$) and the first reference timing signal ($f_{ref}$) to derive an estimated service clock (f s).

2. The method according to claim 1, wherein said data packets (P(i)) are Real-Time Transport Protocol, RTP, packets, said timestamps (TS(i)) generated by the first reference timing signal ($f_{ref}$) are included in the data packets as RTP timestamps in headers of the data packets respectively, and said updated timestamps ($TS_b$(i)) are included in the data packets (P(i)) such that they replace the RTP timestamps in the data packet headers respectively.

3. The method according to claim 1, wherein said updated timestamps ($TS_b$(i)) are included in the data packets' (P(i)) header alongside with the timestamps (TS(i)) generated by the first reference timing signal ($f_{ref}$).

4. The method according to any of claims 1-3, wherein said computing function (F) for adaptive clock recovery is a function of a difference ($t'_i$ - $TS_b$(i)) between an arrival time ($t'_i$) of a selected data packet (P(i)) of said data packets and the updated timestamp ($TS_b$(i)) associated with said selected data packet.

5. A system for recovering a service clock ($f_s$) of a constant bit rate, CBR, service transmitted as a stream of data packets (P(i)) over a packet network (2) from a sending end node (S) to a receiving end node (R), via at least one intermediate node (T), which system includes:

first timestamping means located in the sending end node (S) arranged to associate data packets (P(i)) relating to the CBR service with timestamps (TS(i)) generated by a first reference timing signal ($f_{ref}$); **characterized in that** the system further includes:

differential information generating means in said sending end node (S) for generating a differential information (d_i), which is indicative of a timing difference between the service clock (f_s) and the first reference timing signal (f_ref);

forwarding means for transmitting said differential information (d_i) to said receiving end node (R);

second timestamping means (20) located in at least one intermediate node (T) arranged to associate the data packets (P(i)) with updated timestamps (TS_b(i)) generated by a second reference timing signal (f_b) available in the intermediate node (T); and service clock estimating means located in the receiving end node (R) arranged to derive an estimated service clock (f'_s) by means of a computing function (F) for adaptive clock recovery using said updated timestamps (TS_b(i)) and using said differential information (d_i) to compensate for the timing difference between the service clock (f_s) and the first reference timing signal (f_ref).

6. The system according to claim 5, wherein said data packets (P(i)) are Real-Time Transport Protocol, RTP, packets,

said first timestamping means are arranged to include the timestamps (TS(i)) generated by the first reference timing signal (f_ref) in the data packets as RTP timestamps in headers of the data packets respectively, and

said second timestamping means (20) are arranged to include the updated timestamps (TS_b(i)) in the data packets (P(i)) such that they replace the RTP timestamps in the data packet headers respectively.

7. The system according to claim 5, wherein said second timestamping means (20) are arranged to include said updated timestamps (TS_b(i)) in the data packets' (P(i)) header alongside with the timestamps (TS(i)) generated by the first reference timing signal (f_ref).

8. The system according to claim 5, wherein said intermediate node comprises forwarding means for transmitting the updated timestamps (TS_b(i)) to the receiving end node (R) over a dedicated timing connection as dedicated timestamps such that the dedicated timestamps are transmitted separately from said data packets (P(i)).

9. The system according to any of claims 5-8, wherein said computing function (F) for adaptive clock recovery is a function of a difference (t'_i - TS_b(i)) between an arrival time (t'_i) of a selected data packet (P(i)) of said data packets and the updated timestamp (TS_b(i)) associated with said selected data packet.

**Patentansprüche**

1. Adaptives Taktwiedergewinnungsverfahren zum Wiedergewinnen eines Diensttaktes (f_s) eines Konstante-Bitrate-, CBR-, Dienst, welcher als Strom von Datenpaketen (P(i)) über ein Paketnetz (2) von einem Sendeendeknoten (S) zu einem Empfangsendeknoten (R) über mindestens eine Zwischenknoten (T) übertragen wird, welches Verfahren beinhaltet:

Assoziieren von Datenpaketen (P(i)) bezüglich des CBR-Dienstes mit Zeitstempeln (TS(i)), erzeugt durch ein erstes Referenztaktungssignal (f_ref) in dem Sendeendeknoten (S); **dadurch gekennzeichnet, dass** das Verfahren ferner beinhaltet:

Erzeugen differentieller Information (d_i) in dem Sendeendeknoten (S), welche differentielle Information (d_i) indikativ ist für eine Taktungsdifferenz zwischen dem Diensttakt (f_8) und dem ersten Referenztaktungssignal (f_ref),

Übertragen der Differenzinformation (d_i) zu dem Empfangsendeknoten (R);

Assoziieren von Datenpaketen (P(i)) bezüglich des CBR-Dienstes, in mindestens einem Zwischenknoten (T), mit aktualisierten Zeitstempeln (TS_b(i)), erzeugt durch ein zweites Referenztaktungssignal (f_b), verfügbar in dem Zwischenknoten (T); und Wiedergewinnen des Diensttaktes (f_s) in dem Empfangsendeknoten (R) mittels einer Berechnungsfunktion (F) zur adaptiven Taktwiedergewinnung unter Verwendung der aktualisierten Zeitstempel (TS_b(i)) und Verwenden der differentiellen Information (d_i) zum Kompensieren für die Taktungsdifferenz zwischen dem Diensttakt (f_s) und dem ersten Referenztaktungssignal (f_ref), um einen abgeschätzten Diensttakt (f'_s) abzuleiten.

2. Verfahren nach Anspruch 1, wobei die Datenpakete (P(i)) Echtzeit-Übertragungsprotokoll-, RTP-, Pakete sind, die Zeitstempel (TS(i)), erzeugt durch das erste Referenztaktungssignal (f_ref), in den Datenpaketen als RTP-Zeitstempel jeweils im Kopf der Datenpakete eingefügt werden, und die aktualisierten Zeitstempel (TS_b(i)) in den Datenpaketen (P(i)) eingefügt werden, so dass diese jeweils die RTP-Zeitstempel in den Datenpaketköpfen ersetzen.

3. Verfahren nach Anspruch 1, wobei die aktualisierten Zeitstempel (TS_b(i)) in den Köpfen der Datenpakete (P(i)) neben den Zeitstempeln (TS(i)), erzeugt durch das erste Referenztaktungssignal ($f_{ref}$), eingefügt werden.

4. Verfahren nach einem der Ansprüche 1 bis 3, wobei die Berechnungsfunktion (F) zur adaptiven Taktwiedergewinnung eine Funktion einer Differenz ($t'_i - TS_b$(i)) zwischen einer Ankunftszeit ($t'_i$) eines ausgewählten Datenpakets (P(i)) der Datenpakete und dem aktualisierten Zeitstempel ($TS_b$(i)), assoziiert mit dem ausgewählten Datenpaket, ist.

5. System zum Wiederherstellen eines Diensttakts ($f_s$) eines Konstantbitraten-, CBR-, Dienstes, welcher als ein Strom von Datenpaketen (P(i)) über ein Paketnetz (2) von einem Sendeendeknoten (S) zu einem Empfangsendeknoten (R) über mindestens einen Zwischenknoten (T) übertragen wird, welches System beinhaltet:

erste Zeitstempelmittel, lokalisiert in dem Sendeendeknoten (S), angeordnet zum Assoziieren von Datenpaketen (P(i)) bezüglich des CBR-Dienstes mit Zeitstempel (TS(i)), erzeugt durch ein erstes Referenztaktungssignal ($f_{ref}$); **dadurch gekennzeichnet, dass** das System ferner beinhaltet:

Differentialinformations- Erzeugungsmittel in dem Sendeendeknoten (S) zum Erzeugen einer differentiellen Information ($d_i$), welche indikativ ist für eine Taktungsdifferenz zwischen dem Diensttakt ($f_s$) und dem ersten Referenztaktungssignal ($f_{ref}$);
Weiterleitungsmittel zum Weiterleiten der differentiellen Information ($d_i$) zu dem Empfangsendeknoten (R);
zweite Zeitstempelmittel (20), lokalisiert in mindestens einem Zwischenknoten (T), angeordnet zum Assoziieren der Datenpakete (P(i)) mit aktualisierten Zeitstempeln ($TS_b$(i)), erzeugt durch ein zweites Referenztaktungssignal ($f_b$), verfügbar in dem Zwischenknoten (T); und
Diensttakt-Abschätzungsmittel, lokalisiert in dem Empfangsendeknoten (R), angeordnet zum Ableiten eines abgeschätzten Diensttakts ($f'_s$) mittels einer Berechnungsfunktion (F) zur adaptiven Taktwiedergewinnung unter Verwendung der aktualisierten Zeitstempel ($TS_b$(i)) und Verwenden der differentiellen Information ($d_i$) zum Kompensieren für die Taktungsdifferenz zwischen dem Diensttakt ($f_s$) und dem ersten Referenztaktungssignal ($f_{ref}$).

6. System nach Anspruch 5, wobei die Datenpakete (P(i)) Echtzeit-Übertragungsprotokoll-, RTP-, Pakete sind, das erste Zeitstempelmittel angeordnet ist, um die Zeitstempel (Ts(i)), erzeugt durch das erste Referenztaktungssignal ($f_{ref}$), in den Datenpaketen als RTP-Zeitstempel jeweils in Köpfen der Datenpakete einzufügen, und das zweite Zeitstempelmittel (20) eingerichtet ist, um die aktualisierten Zeitstempel ($TS_b$(i)) in die Datenpakete (P(i)) einzufügen, so dass diese die jeweiligen RTP-Zeitstempel in den Datenpaketköpfen ersetzen.

7. System nach Anspruch 5, wobei das zweite Zeitstempelmittel (20) eingerichtet ist, um die aktualisierten Zeitstempel ($TS_b$(i)) in die Köpfe der Datenpakete (P(i)) neben den Zeitstempeln (TS(i)), erzeugt durch das erste Referenztaktungssignal ($f_{ref}$), einzufügen.

8. System nach Anspruch 5, wobei der Zwischenknoten Weiterleitungsmittel zum Weiterleiten der aktualisierten Zeitstempel ($TS_b$(i)) zu dem Empfangsendeknoten (R) über eine dedizierten Taktungsverbindung als dedizierte Zeitstempel umfasst, so dass die dedizierten Zeitstempel separat von den Datenpaketen (P(i)) übertragen werden.

9. System nach einem der Ansprüche 5 bis 8, wobei die Berechnungsfunktion (F) zur adaptiven Taktwiedergewinnung eine Funktion eine Differenz ($t'_i - TS_b$(i)) zwischen einer Ankunftszeit ($t'_i$) eines ausgewählten Datenpakets (P(i)) der Datenpakete und des aktualisierten Zeitstempels ($TS_b$(i)), assoziiert mit dem ausgewählten Datenpaket, ist.

**Revendications**

1. Procédé de récupération d'horloge adaptative destiné à récupérer une horloge de service ($f_s$) d'un service à débit binaire constant, CBR (pour « Constant Bit Rate »), transmis comme un flux de paquets de données (P(i)) sur un réseau de paquets (2) d'un noeud d'extrémité d'envoi (S) à un noeud d'extrémité de réception (R), par l'intermédiaire d'au moins un noeud intermédiaire (T), lequel procédé comprend le fait :

d'associer des paquets de données (P(i)) relatifs au service CBR avec des horodateurs (TS(i)) générés par un premier signal de synchronisation de référence ($f_{ref}$) dans le noeud d'extrémité d'envoi (S) ; le procédé étant **caractérisé en ce qu'**il comporte en outre le fait :

de générer des informations de différentiel ($d_i$) dans ledit noeud d'extrémité d'envoi (S), lesquelles informations de différentiel ($d_i$)

indiquent une différence de synchronisation entre l'horloge de service (f$_s$) et le premier signal de synchronisation de référence (f$_{ref}$),

de transmettre lesdites informations de différentiel (d$_i$) audit noeud d'extrémité de réception (R) ;

d'associer des paquets de données (P(i)) relatifs au service CBR, dans au moins un noeud intermédiaire (T), avec des horodateurs mis à jour (TS$_b$(i)) générés par un deuxième signal de synchronisation de référence (f$_b$) disponible dans le noeud intermédiaire (T) ; et

de récupérer l'horloge de service (f$_s$) dans le noeud d'extrémité de réception (R) au moyen d'une fonction de calcul (F) pour la récupération d'horloge adaptative en utilisant lesdits horodateurs mis à jour (TS$_b$(i)) et en utilisant lesdites informations de différentiel (d$_i$) pour compenser la différence de synchronisation entre l'horloge de service (f$_s$) et le premier signal de synchronisation de référence (f$_{ref}$) pour dériver une horloge de service estimée (f'$_s$).

2. Procédé selon la revendication 1, dans lequel :

lesdits paquets de données (P(i)) sont des paquets de protocole de transmission en temps-réel, RTP,

lesdits horodateurs (TS(i)) générés par le premier signal de synchronisation de référence (f$_{ref}$) sont inclus dans les paquets de données comme des horodateurs RTP dans les en-têtes des paquets de données respectivement, et

lesdits horodateurs mis à jour (TS$_b$(i)) sont inclus dans les paquets de données (P(i)) de sorte qu'ils remplacent les horodateurs RTP dans les en-têtes des paquets de données, respectivement.

3. Procédé selon la revendication 1, dans lequel lesdits horodateurs mis à jour (TS$_b$(i)) sont inclus dans l'en-tête des paquets de données (P(i)) à côté des horodateurs (TS(i)) générés par le signal de synchronisation de référence (f$_{ref}$).

4. Procédé selon l'une des revendications 1 à 3, dans lequel ladite fonction de calcul (F) pour la récupération d'horloge adaptative est une fonction de différence (t'$_i$ - TS$_b$(i)) entre une heure d'arrivée (t'$_i$) d'un paquet de données sélectionné (P(i)) desdits paquets de données et l'horodateur mis à jour (TS$_b$(i)) associé audit paquet de données sélectionné.

5. Système de récupération d'une horloge de service (f$_s$) d'un service à débit binaire constant, CBR (pour « Constant Bit Rate »), transmis comme un flux de paquets de données (P(i)) sur un réseau de paquets (2) à partir d'un noeud d'extrémité d'envoi (S) à un noeud d'extrémité de réception (R), par l'intermédiaire d'au moins un noeud intermédiaire (T), lequel système comprend :

un premier moyen d'horodatage situé dans le noeud d'extrémité d'envoi (S) disposé pour associer des paquets de données (P(i)) se rapportant au service CBR avec des horodateurs (TS(i)) générés par un signal de synchronisation de référence (f$_{ref}$) ; le système étant **caractérisé en ce qu'**il comprend en outre :

un moyen de génération d'informations de différentiel dans ledit noeud d'extrémité d'envoi (S) pour générer des informations de différentiel (d$_i$), indiquant une différence de synchronisation entre l'horloge de service (f$_s$) et le premier signal de synchronisation de référence (f$_{ref}$) ;

un moyen de transmission pour transmettre lesdites informations de différentiel (d$_i$) audit noeud d'extrémité de réception (R) ;

un deuxième moyen d'horodatage (20) situé dans au moins un noeud intermédiaire (T) agencé pour associer les paquets de données (P(i)) à des horodateurs mis à jour (TS$_b$(i)) générés par un deuxième signal de synchronisation de référence (f$_b$) disponible dans le noeud intermédiaire (T) ; et

un moyen d'estimation d'horloge de service situé dans le noeud d'extrémité de réception (R) agencé pour dériver une horloge de service estimée (f'$_s$) au moyen d'une fonction de calcul (F) pour la récupération d'horloge adaptative en utilisant lesdits horodateurs mis à jour (TS$_b$(i)) et en utilisant lesdites informations de différentiel (d$_i$) afin de compenser la différence de synchronisation entre l'horloge de service (f$_s$) et le premier signal de synchronisation de référence (f$_{ref}$).

6. Système selon la revendication 5, dans lequel :

lesdits paquets de données (P(i)) sont des paquets de protocole de transmission en temps réel, RTP,

ledit premier moyen d'horodatage est agencé pour inclure les horodateurs (TS(i)) générés par le premier signal de synchronisation de référence (f$_{ref}$) dans les paquets de données comme horodateurs RTP dans les en-têtes des paquets de données respectivement, et

ledit deuxième moyen d'horodatage (20) est agencé pour inclure les horodateurs mis à jour (TS$_b$(i)) dans les paquets de données (P(i)) de sorte qu'ils remplacent les horodateurs RTP dans les en-têtes des paquets de données respectivement.

**7.** Système selon la revendication 5, dans lequel ledit deuxième moyen d'horodatage (20) est agencé pour inclure lesdits horodateurs mis à jour (TSb(i)) dans l'en-tête des paquets de données (P(i)) à côté des horodateurs (TS(i)) générés par le premier signal de synchronisation de référence (f$_{ref}$).

**8.** Système selon la revendication 5, dans lequel ledit noeud intermédiaire comprend un moyen de transmission pour transmettre les horodateurs mis à jour (TS$_b$(i)) au noeud d'extrémité de réception (R) sur une connexion de synchronisation dédiée en tant qu'horodateurs dédiés de sorte que les horodateurs spécifiques soient transmis séparément desdits paquets de données (P(i)).

**9.** Système selon l'une des revendications 5 à 8, dans lequel ladite fonction de calcul (F) pour la récupération d'horloge adaptative est une fonction d'une différence (T'$_i$ - TS$_b$(i)) entre une heure d'arrivée (t'$_i$) d'un paquet de données sélectionné (P(i)) desdits paquets de données et l'horodateur mis à jour (TSb(i)) associé audit paquet de données sélectionné.

Fig. 1a

Fig. 1b

Fig. 2

Fig. 3

EP 2 076 983 B1

Fig. 4

EP 2 076 983 B1

$$\text{lower pdv} \longrightarrow \text{Lower Error } \varepsilon_b$$

$$f'_s = F(t'_i - TS_b(i)) = f_s + \varepsilon_b$$

$$\text{High pdv} \longrightarrow \text{Higher Error } \varepsilon$$

$$f'_s = F(t'_i - TS(i)) = f_s + \varepsilon$$

## Fig. 5

New RTP Profile
for improved synchronization

Header extension

## Fig. 6

Fig. 7

Fig. 8

$f_b$

| | | |
|---|---|---|
| Receiver | Time stamping | Forwarding |

21

20

22

$\underline{I}$

# Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030002483 A

### Non-patent literature cited in the description

- *G.8261 Timing and Synchronization aspects in packet networks,* May 2006
- RFC 1350 NTP Network Time Protocol. Internet Engineering Task Force, March 1992
- IEEE-1588™ Standard for a Precision Clock Synchronization Protocol for Networked Measurement and Control Systems. IEEE, 2002
- RFC 3550. IETF, 2003